# EUROPÄISCHE PATENTANMELDUNG

(11) **EP 4 744 904 A1**
(43) Veröffentlichungstag der Anmeldung: **20.05.2026**
(21) Anmeldenummer: 25215142.8
(22) Anmeldetag: 12.11.2025
(51) Int. Cl.: B42D 25/324, B42D 25/41, B23K 26/00, B23K 26/40

(54) **VERFAHREN ZUR HERSTELLUNG EINER RELIEFSTRUKTUR AUF EINEM DATENTRÄGER FÜR EIN WERT- ODER SICHERHEITSDOKUMENT SOWIE DATENTRÄGER**

(30) Priorität: 14.11.2024 DE 102024003891
(71) Anmelder: Bundesdruckerei GmbH, 10969 Berlin (DE)
(72) Erfinder: Ferber, Alexander, 12105 Berlin (DE); Bielesch, Ulrich, 56132 Frücht (DE)

(57) **Zusammenfassung**

Die Erfindung betrifft ein Verfahren zur Herstellung einer Reliefstruktur, insbesondere zur Bildung taktiler Elemente, auf einem Datenträger (200) für ein Sicherheits- und/oder Wertdokument. Dabei wird auf einem Datenträger (200) für ein Sicherheits- und/oder Wertdokument mit einer Substratschicht, deren Volumen durch Energiezufuhr vergrößerbar ist, eine Reliefstruktur (201) auf durch Zuführen von Energie mittels eines Lasers in zu erhöhende Bereiche (203) des Datenträgers (200) erzeugt. Um eine Reliefstruktur (201) mit einem möglichst gleichmäßigen Höhenprofil zu erzeugen, wird der Laserstrahl während der Energiezufuhr zunächst in wenigstens einer ersten Laserrichtung (204) und anschließend in wenigstens einer zweiten Laserrichtung (205) über die zu erhöhenden Bereiche (203) geführt. Zudem betrifft die Erfindung einen Datenträger (200), der mit dem Verfahren hergestellt ist.

## Beschreibung

Die vorliegende Erfindung betrifft ein Verfahren zur Herstellung einer Reliefstruktur, die insbesondere taktile Elemente bildet, auf einem Datenträger für ein Wert- oder Sicherheitsdokument. Außerdem betrifft die Erfindung einen Datenträger für ein Wert- oder Sicherheitsdokument mit einer Reliefstruktur, das nach einem solchen Verfahren hergestellt ist.

Wert- oder Sicherheitsdokumente können beispielsweise ein Personaldokument wie ein Ausweis oder Reisepass, eine Kredit- oder Bankkarte, ein nicht personalisierter Berechtigungsausweis wie eine Fahrkarte oder ein Zahlungsmittel, oder ein für die Produktsicherung bestimmtes Wert- oder Sicherheitselement sein.

Bei Wert- oder Sicherheitsdokumenten, insbesondere solchen mit kartenförmigen Datenträgern, wie Ausweiskarten, Kreditkarten, Scheckkarten und dergleichen, besteht Bedarf, diese gegen Fälschung zu schützen. Dabei soll der Versuch einer Fälschung sicher und ohne aufwendige Prüfmethoden und möglichst ohne zusätzliche Prüfmittel oder Geräte festgestellt werden können.

Reliefstrukturen, z.B. taktile Elemente bildende Reliefstrukturen, sind Sicherheitsmerkmale, die bei der Individualisierung von Wert- oder Sicherheitsdokumenten erstellt werden. Beispielsweise können bei der individuellen Beschriftung eines Datenträgers mit einem Laser in einer Kunststoffschicht Erhöhungen mittels des Lasers eingebracht werden, insbesondere durch Aufschäumen des Kunststoffs. Das Aufschäumen erfolgt aufgrund einer örtlich begrenzten Erhitzung des Materials während des Energieeintrags durch den Laser. Es entstehen somit erhöhte Zeichen, die sich reliefartig von ihrer Umgebung absetzen und als taktile Elemente ertastbar sind.

In der WO 2007/118654 A2 ist ein Verfahren zur Herstellung einer Ausweiskarte mit einer mittels eines Lasers aufgeschäumten Reliefstruktur beschrieben, die von einem mittels Laser verfärbten Bereich konturiert wird.

In der DE 3213315 A1 wird ein Herstellverfahren einer mehrschichtigen Ausweiskarte offenbart, bei welcher in eine Kartenlage des Datenträgers ein Treibmittel zum Aufschäumen mittels eines Lasers eingebracht ist.

Die DE 195 37 177 A1 offenbart ein Herstellverfahren für ein Dokument mit einem kartenförmigen Datenträger, wobei eine Braille-Schriftzeichen bildende Reliefstruktur mittels Laserstrahlung erzeugt wird. Dabei wird das Kunststoffmaterial des Substrats lokal aufschäumt, was zu einer begrenzten Wölbung der Kartenoberfläche führt. Diese makroskopisch sichtbare Aufschäumung wird durch eine Veränderung oder Zerstörung der Polymerstruktur, durch Oxidationsprozesse, durch Freisetzung von Gasen etc. hervorgerufen. Die vorstehenden unterschiedlichen Möglichkeiten des Aufschäumens sind abhängig von der Art des bestrahlten Kunststoffmaterials, von der Laserwellenlänge der Laserquelle sowie von der Intensität und der Dauer der Bestrahlung mit dem Laser.

Die Verwendung eines Lasers zum Beschreiben von Substraten weist den Vorteil auf, dass personalisierte Daten individuell auf die Identitätskarten aufgebracht werden können. Beim Aufschäumen zur Erzeugung einer taktil erfassbaren Reliefstruktur hat sich gezeigt, dass es sehr aufwendig ist, eine hohe Maßhaltigkeit der Reliefstruktur einzuhalten. Dies kann sich insbesondere darin zeigen, dass die erforderliche Höhe der Reliefstruktur, damit diese gut taktil erfassbar ist, nur schwer zu erreichen ist. Wenn dann dennoch versucht wird, die erforderliche Höhe der taktil erfassbaren Reliefstruktur zu erreichen, dann kann es vorkommen, dass das Material an der vom Laserstrahl beaufschlagten Stelle aufgrund des erhöhten Energieeintrags des Lasers größere Blasen bildet und aufplatzt.

Bisherige Verfahren zur Erzeugung einer Reliefstruktur mittels eines Lasers führen daher oft zu ungleichmäßig erhöhten Zeichen. Durch die ungleichmäßige Erhöhung ist zudem die erreichbare Höhe begrenzt. Sowohl wenn die Schrift für den Energieeintrag vektoriell als auch wenn diese gerastert gelasert wird, entstehen Ungleichmäßigkeiten, vor allem im Bereich des Ein- und Aussprungs des Laserstrahls sowie in Kreuzungspunkten.

Es ist daher die Aufgabe der vorliegenden Erfindung, ein Verfahren zur Erzeugung einer Reliefstruktur bereitzustellen, insbesondere zur Bildung von taktilen Elementen, das die erreichbare Qualität zuverlässig verbessert.

Die Aufgabe wird durch die Merkmale der unabhängigen Patentansprüche gelöst. Weitere vorteilhafte Ausführungsformen sind Gegenstand der Beschreibung, der Figuren sowie der abhängigen Patentansprüche.

Gemäß einem ersten Aspekt der Erfindung umfasst das Verfahren zur Herstellung einer Reliefstruktur auf einem Datenträger für ein Sicherheits- und/oder Wertdokument die folgenden Schritte:
Zunächst wird ein Datenträger für ein Sicherheits- und/oder Wertdokument mit einer Substratschicht bereitgestellt, deren Volumen durch Energiezufuhr vergrößerbar ist. Anschließend wird eine Reliefstruktur auf dem Datenträger durch Zuführen von Energie mittels eines Lasers in zu erhöhende Bereiche des Datenträgers erzeugt. Dabei wird der Laserstrahl während der Energiezufuhr zunächst in wenigstens einer ersten Laserrichtung und anschließend in wenigstens einer zweiten Laserrichtung über die zu erhöhenden Bereiche geführt.

Vorliegend wird unter einer Laserrichtung eine Bewegungsrichtung verstanden, in welcher der Laserstrahl während der Energiezufuhr über den Datenträger geführt wird. Unter erster Laserrichtung wird eine Richtung verstanden, die eine erste Orientierung aufweist, insbesondere entlang zueinander paralleler Geraden mit der ersten Orientierung. Unter zweiter Laserrichtung wird entsprechend eine Richtung verstanden, die eine zweite Orientierung aufweist, insbesondere entlang zueinander paralleler Geraden mit der zweiten Orientierung. Es können somit erste Laserrichtungen vorhanden sein, die jeweils auf parallelen Geraden mit der ersten Orientierung in eine Richtung und/oder in der entsprechenden Gegenrichtung verlaufen. Entsprechend können zweite Laserrichtungen gegeben sein, die jeweils auf parallelen Geraden mit der zweiten Orientierung in eine Richtung und/oder in der entsprechenden Gegenrichtung verlaufen. Mit Energiezufuhr ist hier der Vorgang gemeint, mit welchem dem Datenträger mittels des Lasers Energie zugeführt wird. Während der Energiezufuhr wird der Laser entsprechend der zu bildenden Reliefstruktur angesteuert, d.h. der Energieeintrag mittels des Lasers kann in diesem Zeitraum zwischenzeitlich unterbrochen sein.

Der Laserstrahl kann unidirektional, also in einer ersten Laserrichtung geführt werden, oder bidirektional, also in zwei ersten Laserrichtungen. Entsprechend kann der Laserstrahl unidirektional, also in einer zweiten Laserrichtung, oder bidirektional, also in zwei zweiten Laserrichtungen geführt werden.

Soweit vorliegend die Begriffe "Individualisierung", "individualisiert" und "individualisierend" verwendet werden, wird darunter eine Eigenschaft eines Sicherheits- oder Wertdokumentes verstanden, der zufolge das Dokument einem Subjekt mit bestimmten Eigenschaften zuordenbar ist. Diese Eigenschaft ergibt sich aus vorgegebenen Sicherheitsmerkmalen der Wert- oder Sicherheitsprodukte, die jedoch noch keine eindeutige Zuordnung einer bestimmten Person ermöglichen müssen, wie z.B. Informationen zur Gesichtskontur oder der Augenfarbe der Person.

Soweit vorliegend die Begriffe "Personalisierung", "personalisiert" und "personalisierend" verwendet werden, so ist darunter die Eigenschaft eines Wert- oder Sicherheitsdokuments zu verstehen, der zufolge das Dokument einer bestimmten Person zuordenbar ist. Ein Wert- oder Sicherheitsdokument kann auch durch eine Vielzahl individualisierender Informationen personalisiert werden, wenn diese in Kombination die Zuordnung zu einer bestimmten Person erlauben.

Die mittels Laser erzeugte Reliefstruktur kann gemäß bevorzugten Ausführungen der Erfindung zur Individualisierung des Sicherheits- und/oder Wertdokuments verwendet werden, beispielsweise indem individuelle Informationen des Subjekts, dem das Dokument zugeordnet ist, als Schriftzeichen bildende Reliefstruktur in das Dokument eingebracht wird.

Alternativ oder zusätzlich kann die mittels Laser erzeugte Reliefstruktur auch zur Personalisierung des Sicherheits- und/oder Wertdokuments Anwendung finden. Eine Personalisierung kann beispielsweise durch Reliefstrukturen erfolgen, die biometrische Daten des Subjekts, dem das Dokument zugeordnet ist, repräsentieren. Die Reliefstruktur kann beispielsweise von einem Gesichtsbild oder einem Fingerabdruck der Person abgeleitet sein und/oder ein Gesichtsbild bzw. Fingerabdruck darstellen.

Bei dem erfindungsgemäßen Verfahren werden bestimmte Bereiche des Datenträgers durch Zufuhr von Strahlungsenergie, die insbesondere durch Absorption in Wärmeenergie umgewandelt wird, expandiert. Die Vergrößerung des Volumens kann dabei vorzugsweise zu einer dauerhaften Verformung führen, insbesondere durch Aufschäumen des Substrats.

Die Verformung kann beispielsweise durch lokales Aufschmelzen und/oder durch plastische Verformung erfolgen. Auf diese Weise kann eine bei Raumtemperatur und üblichen Umgebungstemperaturen stabile Formgebung erreicht werden, welche die Reliefstruktur langfristig aufrechterhält.

Erfindungsgemäß ist vorgesehen, dass die Reliefstruktur wenigstens zweifach gelasert wird, und zwar in wenigstens zwei verschiedenen Richtungen. Beispielsweise kann das Lasern in einem Durchgang in horizontaler Richtung und anschließend in einem weiteren Durchgang in vertikaler Richtung erfolgen. Des Weiteren kann ein Lasern in einer oder mehreren zusätzlichen Richtungen durchgeführt werden.

Der Datenträger kann mehrschichtig aufgebaut sein, wobei wenigstens eine der Schichten als expandierbare Schicht ausgestaltet sein kann. Die wenigstens eine Substratschicht, deren Volumen durch Energiezufuhr vergrößerbar ist, kann gemäß möglicher Varianten der Erfindung eine expandierbare Schicht des Datenträgers bilden. Alternativ können mehrere expandierbare Substratschichten vorgesehen sein. Die wenigstens eine Substratschicht kann aus einer homogenen Schicht oder aus mehreren unterschiedlichen Schichten aufgebaut sein.

Die Substratschicht kann vorzugsweise wenigstens einen Kunststoff aufweisen, insbesondere einen thermoplastischen Kunststoff. Beispielsweise kann entsprechend eine Substratschicht des Datenträgers einen thermoplastischen Kunststoff umfassen. Thermoplastische Kunststoffe eignen sich besonders wegen des günstigen Schmelzverhaltens, das eine zügige Reliefbildung, zumindest bei Wahl eines geeigneten Lasers auch ohne Verfärbung ermöglicht.

Zur Absorption der Strahlungsenergie des Lasers kann die wenigstens eine Substratschicht, deren Volumen durch Energiezufuhr vergrößerbar ist, wenigstens einen Licht-absorbierenden Zusatz aufweisen. Vorzugsweise kann die Substratschicht Rußpartikel aufweisen. Die Rußpartikel sind vorzugsweise homogen in der Substratschicht verteilt. Somit ist der technische Vorteil gegeben, dass eine gleichmäßige Absorption der Strahlungsenergie des Lasers sichergestellt und die Herstellung einer gleichmäßigen Reliefstruktur vereinfacht ist.

Der Kunststoff der Substratschicht kann mit einem chemischen oder physikalischen Treibmittel versehen sein, um das Aufschäumen zu erleichtern.

Es hat sich herausgestellt, dass die Erzeugung der Reliefstruktur in zwei Durchläufen in unterschiedlichen Richtungen die Beanspruchung des Substratmaterials vorteilhaft reduziert. Der an der Stelle der Erhöhung auf den Datenträger wirkende lokale mechanische Stress wird verringert. Ungewollte Überhöhungen, die ansonsten insbesondere in Laserrichtung auftreten und zu einem ungleichmäßigeren Höhenprofil mit stärker begrenzter Zielhöhe führen, werden vermieden. Entsprechend werden Beschädigungen an dem Datenträger verringert.

Insgesamt führt die hier dargestellte Erfindung zu einer deutlichen Homogenisierung der Höhe der taktilen Elemente und erlaubt somit einen größeren Spielraum bei der zu erzielenden Höhe. Weiterhin können durch die erfindungsgemäße Lösung nachteilige Effekte der Standardpersonalisierung mittels Laser, wie Schwärzungen von Guillochen oder lokale Anlösungen (Delamination) im Randbereich der Buchstaben, minimiert werden.

Das Lasern der Reliefstruktur nur in einer ersten und einer zweiten Laserrichtung hat den technischen Vorteil, dass ein qualitativ hochwertiges, gleichmäßiges Höhenprofil der Reliefstruktur bzw. des taktilen Elementes hergestellt werden kann - und das bei einem gegenüber einem herkömmlichen Verfahren, bei dem nur in einer ersten Laserrichtung, nur geringfügig erhöhtem Zeitaufwand. Mit dem Vorteil der Erzeugung eines noch gleichmäßigeren Höhenprofils der Reliefstruktur kann gemäß einer weiteren erfindungsgemäßen Variante des Verfahrens der Laser während der Energiezufuhr in wenigstens einer weiteren Laserrichtung über die zu erhöhenden Bereiche geführt werden. Beispielsweise kann der Laser während der Energiezufuhr in einer dritten Laserrichtung und/oder einer vierten und/oder weiteren Laserrichtungen über die zu erhöhenden Bereiche geführt werden. Die Anzahl der Laserrichtungen und damit Durchläufe des Laservorgangs kann insbesondere mit einer Gegenüberstellung der erreichbaren Qualität mit dem erforderlichem Zeitaufwand bestimmt werden.

In weiteren Ausführungsformen der Erfindung kann die Reliefstruktur zweifach oder häufiger, z.B. dreifach oder vierfach identisch gelasert werden, d.h. mit dem Laser wird derselbe Bereich bearbeitet. Durch Anpassung der jeweiligen Laserparameter und der unterschiedlichen Wirkrichtung auf die Höhe lassen sich die Höhenunterschiede gut angleichen.

Das Wert- oder Sicherheitsdokument kann beispielsweise ein Reisepass, ein Personalausweis, ein Führerschein, ein Aufenthaltstitel oder eine andere ID-Karte oder ein Zugangskontrollausweis, eine Scheck-, eine Bank-, oder eine Kredit- oder Barzahlungskarte, eine Kundenkarte, eine Gesundheitskarte, eine Chipkarte, ein Firmenausweis, ein Berechtigungsnachweis, ein Mitgliedsausweis oder ein anderes ID-Dokument sein.

Der Datenträger kann insbesondere für visuell lesbare Daten ausgestaltet sein, wie sie beispielsweise für Kreditkarten, Ausweiskarten und dergleichen Anwendung finden. Der Datenträger kann zum Schutz der aufgebrachten Daten mit einer zusätzlichen Deckschicht, beispielsweise einer transparenten Deckfolie, wie einer Klarsichtfolie aus beispielsweise Polyvinylchlorid oder Polyester, versehen sein. Eine transparente Deckfolie kann verhindern, dass die auf dem Datenträger aufgezeichneten Daten (Text, Bilder, Logos, Muster, Hoheitszeichen und dergleichen) durch Verschmutzen oder Abrieb beim normalen Gebrauch unleserlich bzw. unkenntlich werden, und zum anderen, dass die Daten in einfacher Weise und mit geringem Aufwand verändert oder verfälscht werden können.

Mittels der Reliefstruktur können ein oder mehrere taktile Elemente gebildet werden. Vorliegend werden unter taktilen Elementen Reliefstrukturen verstanden, die ertastet werden können. Die Reliefstrukturen werden vorzugsweise derart gebildet, dass zumindest das Vorhandensein bzw. die Position der Reliefstruktur ertastet werden kann.

Die Reliefstruktur kann Linien aufweisen. Linien der Reliefstruktur können sich überkreuzen. Beispielsweise kann die Reliefstruktur von Buchstaben und/oder Zahlen gebildet sein. Dabei können die Zahlen und/oder Buchstaben sich überkreuzende Linien aufweisen. Insbesondere an Kreuzungspunkten von sich überkreuzenden Linien hat sich das erfindungsgemäße Verfahren als vorteilhaft erwiesen, weil ein gleichmäßigeres Höhenprofil mit verringertem lokalem Stress auf dem Datenträger erreicht werden kann.

In bevorzugten Varianten des Verfahrens kann wenigstens ein Schriftzeichen, insbesondere ein den Datenträger individualisierendes und/oder personalisierendes Schriftzeichen, als taktiles Element ausgebildet werden. Dabei kann das taktile Element derart ausgestaltet werden, dass zumindest die Position des Schriftzeichens ertastbar wird. Vorzugsweise kann das Beschriften des Datenträgers und die Herstellung des taktilen Elementes mit demselben Laser erfolgen. Die Individualisierung und/oder Personalisierung des Datenträgers kann somit in hoher Geschwindigkeit und mit geringem Aufwand durchgeführt werden.

Die zweite Laserrichtung, in welcher der Laserstrahl über die zu erhöhenden Bereiche geführt wird, verläuft vorzugsweise im Wesentlichen rechtwinkelig zur ersten Laserrichtung. Dies führt, zumindest bei der Ausführung von Zeichen, deren Linien hauptsächlich in zwei zueinander rechtwinklig verlaufenden Linien, wie z.B. lateinische Buchstaben, als taktile Elemente, zu einer qualitativ guten Reliefstruktur mit einem gleichmäßigen Höhenprofil.

Der Datenträger kann in bevorzugten Ausführungsformen eine Sichtebene aufweisen, auf der aufgedruckte Daten für einen Betrachter sichtbar sind. Der bereitgestellte Datenträger kann insbesondere kartenförmig ausgestaltet sein, wobei die Sichtebene durch die Kartenebene definiert wird. Die Sichtebene kann insbesondere der Oberfläche des Datenträgers entsprechen.

Erste und zweite Laserrichtung können bevorzugt parallel zur Sichtebene des Datenträgers verlaufen. Die Energiezufuhr mittels des Lasers erfolgt hingegen vorzugsweise im Wesentlichen vertikal zur Sichtebene. Entsprechend kann die Strahlrichtung des Lasers vertikal zur Sichtebene verlaufen. Durch die Energiezufuhr wird das Volumen in zu erhöhenden Bereichen im Wesentlichen vertikal zur Sichtebene erhöht.

Das Volumen der zu erhöhenden Bereiche kann insbesondere senkrecht zu einer durch die beiden Richtungen aufgespannten Ebene erhöht werden, um eine scharfe Abgrenzung der Reliefstruktur gegenüber umgebenden Bereichen zu bewirken. Liegen die erste und zweite Laserrichtung in einem kartesischen Koordinatensystem auf einer durch die x-Achse und die y-Achse aufgespannte Ebene, kann das Volumen der zu erhöhenden Bereiche insbesondere in z-Richtung erhöht werden. Dies kann insbesondere durch den zu erhöhenden Bereich umgebendes Material erreicht werden, das eine seitliche Begrenzung des zu erhöhenden Bereiches des Datenträgers bildet und/oder dem Aufbau eines Gegendruckes bei der Erzeugung der Reliefstruktur dienen kann.

Der Laserstrahl kann gemäß bevorzugten Varianten des Verfahrens entlang einem Raster bewegt werden. Die Energie kann entsprechend zeilenweise und/oder spaltenweise dem zu erhöhenden Bereich zugeführt werden. Das Raster kann insbesondere dem einer Rastergrafik entsprechen. Die Auflösung des Rasters kann beispielsweise der eines für den Laserdruck vorgesehenen Bitmaps der Grafik oder des Schriftzeichens entsprechen, das als Reliefstruktur ausgeführt werden soll. Insbesondere kann eine für den Laserdruck verwendete Rastergrafik auch für die Erstellung der Reliefstruktur verwendet werden. In bevorzugten Varianten der vorliegenden Erfindung kann die Auflösung eines Rasters, auf dessen Grundlage die Reliefstruktur gelasert wird, entsprechend dem Anwendungsfall ausgewählt werden. Die zu verwendende Auflösung kann beispielsweise auf Grundlage des gewählten Materials des Datenträgers und der gewählten Laserquelle bestimmt werden.

Vorzugsweise kann die Energiezufuhr mittels des Lasers gerastert erfolgen. Mit ,gerastert' ist vorliegend gemeint, dass sich die Energiezufuhr durch den Laser an einem Bitmap der zu erzeugenden Reliefstruktur orientiert, d.h. die Energie wird zeilenweise und/oder spaltenweise zugeführt, wobei der Laser Punkt für Punkt angesteuert wird. Vorzugsweise wird der Laser bidirektional betrieben, d.h. in eine Richtung sowie in Gegenrichtung. Wie sich in Versuchen gezeigt hat, können insbesondere bei gerastertem Lasern der Reliefstrukturen durch das Lasern in wenigstens zwei Laserrichtungen stärkere und gleichmäßigere Erhöhungen erreicht werden. So wird z.B. der ansonsten beim gerasterten Lasern mittels eines Faserlaser potenziell verstärkte Ramp-up-Effekt durch das erfindungsgemäße Verfahren vorteilhaft weitgehend kompensiert.

Gegenüber vektoriellem Lasern, bei dem der Laser einer Vektorgrafik folgt, entfällt bei dem Lasern entlang eines Rasters eine aufwändige Wegoptimierung, die zur Einhaltung von Qualitätsanforderungen an taktile Elemente erforderlich ist. So wird beim vektoriellen Lasern versucht, einen konstanten Energieeintrag je Wegstrecke zu erreichen. Beim Lasern geradliniger Strukturen kann der Laser mit konstanter Geschwindigkeit über den Datenträger bewegt werden. Bei Linienführungen mit Richtungsänderungen und an Kreuzungspunkten muss die Geschwindigkeit und Leistung des Lasers jedoch variiert werden, um den Energieeintrag anzupassen. Ansonsten kann z.B. an spitzen Umkehrpunkten oder Kreuzungspunkten zu viel Energie eingekoppelt werden, wodurch Überhöhungen und/oder ein Aufplatzen des Materials auftreten können. Das Erfordernis der Wegoptimierung führt beim Lasern von Schriftzeichen zu Einschränkungen bzgl. möglicher Zeichensätze bzw. die erreichbare Qualität eines taktilen Elements hängt beim vektoriellen Lasern bei unzureichender Wegoptimierung von der Linienführung des Schriftzeichens ab.

Die Reliefstruktur kann vorzugsweise Schriftzeichen bilden, wobei die erste und/oder die zweite Laserrichtung, in welcher der Laserstrahl während der Energiezufuhr über die zu erhöhenden Bereiche geführt wird, einer Hauptlinienrichtung der Schriftzeichen entspricht. Vorliegend wird unter Hauptlinienrichtung die Richtung verstanden, in welcher der Linienverlauf der Schrift anteilig am größten ist. Bei klassischen lateinischen Druckbuchstaben wie z.B. denen des Schrifttyps Arial wie auch bei dem von der International Civil Aviation Organization (ICAO) für den Maschinenlesbaren Bereich (MRZ) von Reisepässen definierten Schriftsatz, verläuft die Hauptlinienrichtung üblicherweise von unten nach oben bzw. von oben nach unten. Ist die Schrift kursiv ausgeführt, kann die Hauptlinienrichtung entsprechend schräg verlaufen.

Gemäß bevorzugten Ausführungsformen des Verfahrens können die Schriftzeichen mit der Erzeugung der Reliefstruktur mittels des Lasers in einem Arbeitsgang gefärbt werden. Die Färbung der Schriftzeichen erfolgt bevorzugt gleichzeitig mit der Erzeugung der Reliefstruktur. Gegenüber einem Druck in einem separaten Arbeitsgang, z.B. mittels eines Lasers und/oder eines Inkjet-Druckers, ist der Zeitbedarf vorteilhaft verkürzt.

Die Reliefstruktur kann in alternativen Ausführungsformen der Erfindung in ein Bild des Sicherheits- und/oder Wertdokumentes integriert sein. Z.B. Sicherheitsdokumente wie Reisepässe, Personalausweise oder Führerscheine weisen als Sicherheitsmerkmal Bilder der jeweiligen Person auf. Bei der Herstellung der Sicherheitsdokumente werden die Daten der digitalen oder digitalisierten Bilder mit dem Raster Imaging Process (RIP) aufbereitet. Mit den Daten für ein solches aufbereitetes Bild kann die Reliefstruktur gerastert wenigstens in einem Teilbereich des Bildes erzeugt werden.

Gemäß einer weiteren vorteilhaften Variante des erfindungsgemäßen Verfahrens kann die Energiezufuhr mittels des Lasers in der ersten Laserrichtung mit einer ersten Leistung und in der zweiten Laserrichtung mit einer zweiten Leistung erfolgen, wobei die zweite Leistung vorzugsweise gegenüber der ersten Leistung verringert ist, insbesondere um nicht mehr als 20 %. In einer bevorzugten Ausführung des Verfahrens ist die zweite Leistung gegenüber der ersten Leistung etwa 5 % verringert. In Versuchen hat sich überraschenderweise gezeigt, dass mit diesem Leistungsverhältnis eine qualitativ besonders gute Reliefstruktur erzeugen lässt. Insbesondere kann die zweite Leistung gegenüber der ersten Leistung um wenigstens 3% verringert sein. In alternativen Ausgestaltungen des Verfahrens kann die zweite Leistung gegenüber der ersten Leistung vorzugsweise um etwa 10 %, äußerst vorzugsweise um etwa 20 % verringert sein. Bei der Auswahl des Wertes können insbesondere Eigenschaften des Datenträgers Berücksichtigung finden, wie Absorptionseigenschaften der Substratschicht, deren Volumen durch Energiezufuhr vergrößerbar ist.

Eine weitere Variante des Verfahrens sieht vor, dass erste und zweite Leistung im Wesentlichen gleich sind. Es hat sich gezeigt, dass sich bereits ohne Einstellung oder Variation der Leistung des Lasers je nach Anwendungsfall eine gleichmäßige Volumenvergrößerung erreichen lässt. Somit ist das Verfahren einfach und robust gestaltet. Somit kann eine Vereinfachung des Verfahrens erreicht werden. Dabei ist die Leistung insbesondere in erster und zweiter Richtung auf den gleichen Zielwert eingestellt, kann aber aufgrund der Funktionsweise des Lasers geringfügig variieren. Insbesondere kann sich die Leistung in der wenigstens einen ersten Laserrichtung nicht mehr als 20%, vorzugsweise nicht mehr als 10% von der Leistung in der wenigstens einen zweiten Laserrichtung unterscheiden.

In bevorzugten Ausführungsformen des Verfahrens wird die Strahlungsenergie des Lasers in der ersten Laserrichtung und in der zweiten Laserrichtung in jeweils identische Grundflächen eingebracht. Auch dieser Aspekt führt zu einer vorteilhaften Vereinfachung des Verfahrens. Dabei entsprechen die Grundflächen insbesondere den Grundflächen der zu erhöhenden Bereiche. Die Grundflächen verlaufen vorzugsweise parallel zur Sichtebene des Datenträgers, insbesondere bei Verwendung eines kartenförmigen Datenträgers.

In alternativen Ausführungsformen des Verfahrens kann mittels des Lasers die Energie in der ersten Laserrichtung in eine Grundfläche eingebracht werden, die sich gegenüber der Grundfläche der zweiten Laserrichtung unterscheidet. Beispielsweise können Überschneidungen von Linien in einer Richtung zumindest teilweise ausgespart werden, um den Energieeintrag und/oder das Höhenprofil der Reliefstruktur an Überschneidungen an benachbarte Linien anzugleichen.

In einer weiteren Variante des Verfahrens kann eine Laserstrahlung absorbierende Schicht des Datenträgers vor der Zuführung der Energie mittels des Lasers mit wenigstens einer für die Laserstrahlung zumindest teilweise durchlässigen Schicht bedeckt und verbunden werden. Zunächst kann vor der Laserbearbeitung auf die laserfähige Folienlage eine transparente, nicht-laserfähige Drucklage aufgebracht werden. Des Weiteren kann vor der Laserbearbeitung auf die transparente, nicht-laserfähige Drucklage eine äußere Schutzlage aufgebracht werden. Durch den Laser erzeugte Aufwölbungen treten somit zwar sichtbar bzw. ertastbar an der Oberfläche des Datenträgers hervor, sind jedoch durch die durchlässige Schicht des Datenträgers geschützt.

Um die Prozesssicherheit zu erhöhen und um Ausschuss zu reduzieren, hat es sich als vorteilhaft erwiesen, die einzelnen Lagen des Wert- oder Sicherheitsdokuments thermisch zu fügen, bevor die taktil nicht erfassbaren personenspezifischen und/oder dokumentspezifischen Informationen eingebracht werden. Aus dem gleichen Grund hat es sich auch als vorteilhaft erwiesen, wenn die einzelnen Lagen des Wert- oder Sicherheitsdokumentes thermisch gefügt werden, bevor die personenspezifischen und/oder dokumentenspezifischen Informationen in Form taktil erfassbarer Elemente eingebracht werden.

Ein erfindungsgemäßer Datenträger kann mit einer mit dem oben beschriebenen Verfahren hergestellten Reliefstruktur versehen sein. Dabei können auch eine oder mehrere der oben beschriebenen Varianten des Verfahrens Anwendung finden.

In einer vorteilhaften Ausgestaltung eines erfindungsgemäßen Datenträgers weist dieser wenigstens ein taktiles Element auf, hergestellt mit einem Verfahren nach einem der obigen Ansprüche. Durch Anwendung des erfindungsgemäßen Verfahrens kann das wenigstens eine taktile Element mit geringen Toleranzen bzw. einem gleichmäßigen Höhenprofil hergestellt sein.

Eine vorteilhafte Weiterbildung des Datenträgers weist eine Reliefstruktur mit erhöhten Bereichen mit einer ersten Erhöhung auf, und einer zweiten Erhöhung, die auf der ersten Erhöhung aufbaut. Die erste Erhöhung ist in einem ersten Laserdurchlauf erzeugt, die zweite Erhöhung in einem zweiten Durchlauf.

Durch das erfindungsgemäße Verfahren ist es möglich, Reliefstrukturen mit einem Höhenprofil mit geringeren Abweichungen zu erstellen. Ein erfindungsgemäßer Datenträger weist entsprechend eine Reliefstruktur mit einer Zielhöhe und/oder mittleren Höhe auf, wobei die Höhe der Reliefstruktur maximal 20-30 %, vorzugsweise 15-20 %, äußerst vorzugsweise weniger als 15 % von der Zielhöhe und/oder mittleren Höhe abweicht.

Die Höhenabmessungen taktiler Elemente einer Variante eines erfindungsgemäßen Datenträgers können z.B. bis zu 80 Mikrometer betragen, ohne dass Beschädigungen des Datenträgers, wie z.B. Ablösungen, den Datenträger unbrauchbar machen. Zudem kann der erfindungsgemäße Datenträger gegenüber dem Stand der Technik ein deutlich gleichmäßigeres Höhenprofil aufweisen. Beispielsweise können Schriftzeichenlinien der Reliefstruktur des erfindungsgemäßen Datenträgers bei einem eingestellten Mittelwert der Höhe der Reliefstruktur von etwa 16 µm eine Höhe von 12 bis 20 µm aufweisen, an Kreuzungspunkten von Linien eine mittlere Höhe von ca. 22 µm. Hingegen treten bei herkömmlichen Datenträgern in Schriftzeichenlinien der Reliefstruktur Höhen von 0 µm und an Kreuzungspunkten Höhen von mehr als 44 µm auf.

Eine weitere Ausführungsform eines erfindungsgemäßen Datenträgers kann eine Vielzahl von Schichten aufweisen, mit wenigstens einer Laserstrahlung absorbierenden Schicht und wenigstens einer für die Laserstrahlung zumindest teilweise durchlässigen Schicht. Nach ihrer Herstellung bleibt die Reliefstruktur auf diese Weise gegen äußere Einflüsse geschützt. Es kann zusätzlich auf einer transparenten, nicht-laserfähigen Drucklage eine äußere Schutzlage aufgebracht sein.

Als transparente laserfähige Folienlage kann beispielsweise ein Material in Betracht kommen, vorzugsweise Polycarbonat (PC), alternativ Polyester (Polyethylenterephthalat PET). Diese Materialien haben sich als vorteilhaft zur Bearbeitung mit einem Laser erwiesen. Dabei kann schichtweise oder bereichsweise durch Zugabe von Rußpartikeln eine Absorption der Strahlungsenergie des Lasers erreicht werden.

Grundsätzlich können alle Laser geeigneter Leistungsklassen verwendet werden, deren Wellenlänge vom zu bearbeitenden Material ganz oder teilweise absorbiert wird. Vorzugsweise wird für die Laserbearbeitung ein Dioden- oder Faserlaser eingesetzt. Dieser kann als ein gepulster Laser mit vorzugsweise Pulsdauern im Nanosekunden-Bereich gebildet sein. Hierdurch ist gewährleistet, dass durch den gepulsten Betrieb nur wenig Wärme in den Lagenaufbau eingebracht wird und gezielt die Intensität des Laserstrahls dort angelangt, wo sie benötigt wird. Somit kann Geschwindigkeit der Personalisierung des Datenträgers insgesamt vorteilhaft erhöht werden.

Faserlaser weisen vorteilhaft eine hohe Strahlqualität bei einem kompakten, wartungsfreien und unempfindlichen Aufbau auf und können somit die Wirtschaftlichkeit des Verfahrens erhöhen. Der gegenüber anderen Bauarten geringere Raumbedarf einer Faserlasereinrichtung ermöglicht, Fertigungskapazitäten bei beschränkten Platzverhältnissen zu erhöhen. Die Faserlasereinrichtung kann insbesondere eine Luftkühlung aufweisen, unter Verzicht auf eine Flüssigkeitskühlung, um den Aufbau weiter zu vereinfachen. Auf gesondert gekapselte Kühlkreisläufe mit gesteuerter Temperatur, um Laserparameter konstant zu halten, kann bei Verwendung von Faserlasern verzichtet werden.

Ein Nachteil von Faserlasern ist ein möglicher Ramp-Up-Effekt, wodurch die Laserenergie bei kurzen Laserimpulsen nicht vollständig zur Verfügung steht. Somit entstehen Unregelmäßigkeiten in der Reliefstruktur. Es hat sich gezeigt, dass dieser Nachteil durch das erfindungsgemäße Verfahren größtenteils kompensiert und somit die Qualität der Reliefstruktur bei Verwendung eines Faserlasers verbessert wird.

Der Datenträger ist beispielsweise ein Rohling oder ein bereits personalisierter Datenträger eines Reisepasses, eines Personalausweises, eines Führerscheines oder einer anderen ID-Karte. Der Datenträger kann auch ein Rohling für einen Zugangskontrollausweis, einen Fahrzeugschein, einen Fahrzeugbrief, ein Visum, ein Scheck, oder auch eine Scheck-, eine Bank-, eine Kredit- oder eine Barzahlungskarte, eine Kundenkarte, eine Gesundheitskarte, eine Chipkarte sein. Zudem kann der Datenträger einen Rohling darstellen eines Firmenausweises, eines Berechtigungsnachweises, eines Mitgliedsausweises oder ein anderes ID-Dokument.

Vorzugsweise liegt der Datenträger schon selbst in ID 1-, ID 2-, ID 3- oder in irgendeinem anderen Format vor. Der Datenträger ist im Allgemeinen vorzugsweise ein Laminat aus mehreren Dokumentenlagen, die unter Wärmeeinwirkung und unter erhöhtem Druck flächig miteinander verbunden sind.

In bevorzugten Ausführungen können Lagen des Datenträgers aus einem Trägermaterial bestehen, das sich für eine Lamination eignet. Der Datenträger kann aber vorzugsweise aus einem Polymer gebildet sein, das ausgewählt ist aus einer Gruppe, umfassend Polycarbonat (PC), insbesondere Bisphenol-A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann der Datenträger auch aus mehreren dieser Materialien hergestellt sein. Bevorzugt besteht der Datenträger aus PC, PVC und/oder PET. Die Polymere können entweder gefüllt oder ungefüllt vorliegen. Im letzteren Falle sind sie vor zugsweise transparent oder transluzent. Falls die Polymere gefüllt sind, sind sie opak.

Die vorstehenden Angaben beziehen sich sowohl auf miteinander zu verbindende Folien als auch auf Flüssigformulierungen, die auf ein Vorprodukt aufgebracht werden, wie einen Schutz oder Decklack. Bevorzugt wird das Produkt aus drei bis zwölf, vorzugsweise vier bis zehn Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktionaltechnischer Zusammenhang besteht, der zur Ausführung der Erfindung beibehalten werden muss.

Weitere Vorteile und Einzelheiten der Erfindung werden beispielhaft anhand der in den schematischen Figuren dargestellten Ausführungsbeispielen näher erläutert. Hierbei zeigt:
- Fig. 1: eine schematische Darstellung eines erfindungsgemäßen Verfahrens;
- Fig. 2: eine schematische Darstellung eines erfindungsgemäßen Sicherheitsdokumentes;
- Fig. 3: eine vergrößerte Ansicht eines Ausschnitts der Fig. 2.

Im Folgenden werden beispielhafte Ausführungsformen der Erfindung mit Bezugnahme auf die Figuren beschrieben, wobei gleiche Bezugszeichen sich auf gleiche Elemente beziehen. Es versteht sich, dass auch andere Ausführungsformen erstellt und Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele auch in anderer Weise miteinander kombiniert werden können, sofern nicht etwas anderes angegeben ist.

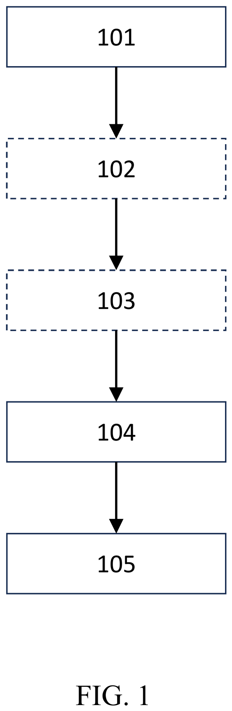

Anhand von Figur 1 wird das Verfahren zur Herstellung einer Reliefstruktur auf einem Datenträger für ein Sicherheits- und/oder Wertdokument gezeigt.

Zunächst wird ein Datenträger für ein Sicherheits- und/oder Wertdokument bereitgestellt, mit einem Substrat, dessen Volumen durch Energiezufuhr vergrößerbar ist, 101. Der Datenträger kann z.B. ein Rohling oder ein bereits individualisierter bzw. personalisierter Datenträger für einen Personalausweis oder einen Reisepass sein. Das Substrat umfasst vorzugsweise einen thermoplastischen Kunststoff, zumindest eine Schicht aus thermoplastischem Kunststoff oder ist vollständig aus diesem gefertigt. Der thermoplastische Kunststoff ist ausgestaltet, Strahlungsenergie eines Lasers zu absorbieren, insbesondere durch die Zugabe von Rußpartikeln. Dabei kann das Substrat als Bestandteil des Datenträgers von einer laserdurchlässigen Schicht, beispielsweise einer Folie oder einer Schutzlackierung bedeckt sein.

In einem weiteren, optionalen Schritt 102 können die für die Erzeugung einer angestrebten Reliefstruktur geeigneten Laserparameter bestimmt werden, 102, und/oder eingestellt werden, 103. Die Schritte 102 und 103 können vor oder nach Schritt 101 erfolgen. Die in Schritt 102 bestimmten Laserparameter können einer oder mehrere der folgenden sein: Die erforderliche Leistung des Lasers, eine Pulsdauer des Lasers, eine Pulswiederholfrequenz des Lasers, ein Arbeitsabstand des Lasers, eine Rasterauflösung zur gerasterten Steuerung des Lasers, sowie wenigstens eine geeignete erste und/oder zweite Laserrichtung, in welche der Laserstrahl geführt werden soll. In einem Standardfall kann zwischen erster und zweiter Richtung ein Winkel von 90° vorgesehen sein. Beispielsweise kann eine erste Laserrichtung horizontal und eine zweite Laserrichtung vertikal verlaufen. Alternativ können erste und zweite Laserrichtungen z.B. abhängig von der Geometrie der Reliefstruktur bestimmt werden, um z.B. eine vorwiegend vorhandene Hauptlinienrichtung der zu erzeugenden Reliefstruktur zu berücksichtigen. Die einzustellenden Werte können insbesondere aus Referenztabellen entnommen werden. Die Einstellung in Schritt 103 erfolgt anschließend entsprechend der zuvor bestimmten Laserparameter.

Im nächsten Schritt 104 wird eine Reliefstruktur auf dem Datenträger durch Zuführen von Energie mittels des Lasers in den wenigstens einen zu erhöhenden Bereich des Datenträgers erzeugt, wobei der Laserstrahl zunächst in einer ersten Laserrichtung über den zu erhöhenden Bereich geführt wird. Dazu wird der Laserstrahl unidirektional, d.h. in einer ersten Laserrichtung, oder bidirektional, d.h. in zwei ersten Laserrichtungen über den Datenträger bewegt.

In Schritt 105 erfolgt die Fortsetzung der Erzeugung der Reliefstruktur, wobei der Laserstrahl in einer zweiten Laserrichtung über den Datenträger gelenkt wird. Dabei können zu erhöhende Bereiche erstmals erhöht und/oder in Schritt 104 bereits erhöhte Bereiche weiter erhöht werden.

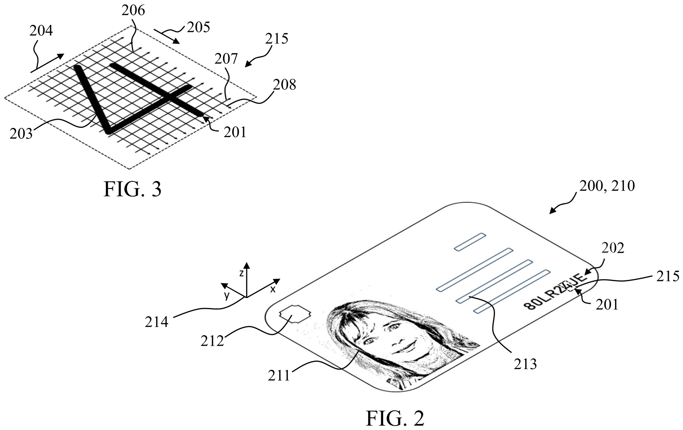

Figur 2 zeigt ein Sicherheits- und/oder Wertdokument 210 mit einem Datenträger 200 , mit einem Lichtbild 211 sowie einem Marken- oder Hoheitszeichen 212. auf dem Datenträger 200 sind Daten 213 aufgedruckt, mit welchen das Sicherheits- und/oder Wertdokument 210 individualisiert und/oder personalisiert ist. Der Datenträger ist mit Schriftzeichen 202 versehen, in deren Bereich eine Reliefstruktur 201 gebildet ist. In diesem Ausführungsbeispiel ist die Ziffer 4 der Schriftzeichen 202 als Reliefstruktur 201 ausgebildet. Die Reliefstruktur 201 ist zusätzlich zur Färbung des Schriftzeichens gebildet. Die Reliefstruktur 201 bildet somit ein taktiles Element auf dem Datenträger 200 des Sicherheitsdokumentes- und/oder Wertdokumentes 210, das als solches ertastbar ausgestaltet ist und ein Sicherheitsmerkmal des Dokumentes 200 bildet.

Alternativ oder zusätzlich können auch andere auf den Datenträger 200 aufgebrachte Elemente des Sicherheits- und/oder Wertdokumentes 210 zumindest abschnittsweise zu taktilen Elementen erhöht werden, wie z.B. das Lichtbild 211, das Marken- oder Hoheitszeichen 212 und/oder aufgedruckten Daten 213. Es können auch biometrische Merkmale als Reliefstruktur ausgebildet werden, indem zum Beispiel in dem Lichtbild enthaltene biometrische Merkmale als Reliefstruktur ausgebildet werden.

Zudem können Reliefstrukturen, insbesondere als taktile Elemente, unabhängig von gedruckten Elementen des Datenträgers, d.h. ohne sichtbare Färbung, mittels des Lasers eingebracht werden.

Figur 3 zeigt den Ausschnitt 215 der Figur 2 in einer vergrößerten Ansicht. Es ist beispielhaft die Ziffer 4 einer Seriennummer des Sicherheits- und/oder Wertdokumentes 200 der Figur 2 vergrößert dargestellt. Die mit der Ziffer 4 schwarz gefärbte Fläche entspricht einem zu erhöhenden Bereich 203, dem zuvor mittels eines Lasers Energie zugeführt wurde. Dazu wird der Laserstrahl in einer ersten Laserrichtung 204 mehrfach über den Datenträger 200 geführt, um eine erste Erhöhung in dem zu erhöhenden Bereich 203 zu erreichen. Des Weiteren wird der Laserstrahl in einer zweiten Laserrichtung 205 mehrfach über den zu erhöhenden Bereich 203 geführt, um eine zweite Erhöhung in dem zu erhöhenden Bereich 203 zu bewirken.

Erste und zweite Laserrichtung liegen in dem Koordinatensystem 214 auf einer durch die x-Achse und die y-Achse aufgespannte Ebene, die parallel zur Oberfläche des Datenträgers 200 verläuft. Wird der expandierbaren, die Strahlungsenergie des Lasers absorbierenden Substratschicht im zu erhöhenden Bereich 203 mittels des Lasers Energie zugeführt, erhöht sich das Volumen des zu erhöhenden Bereichs 203 insbesondere in z-Richtung.

Die mit dem Laserstrahl gefahrenen Wege orientieren sich vorzugsweise an einem Raster, z.B. dem einer Rastergrafik des darzustellenden Zeichens. So kann der Laserstrahl entlang der Linien eines Liniengitters 206 über den Datenträger 200 bewegt werden, um die Punkte des Rasters zu füllen. Das in Figur 3 nur schematisch dargestellte Liniengitter 206 weist dabei eine Auflösung auf, die es ermöglicht, mit einem Energieeintrag mittels des Lasers entlang von ersten Bahnen 207 und dazu z.B. senkrecht verlaufenden zweiten Bahnen 208 den zu erhöhenden Bereich 203 vollständig, insbesondere flächendeckend mit Energie zu beaufschlagen.

Das Lasern des zu erhöhenden Bereiches kann zunächst in der ersten Laserrichtung 204 und anschließend in der zweiten Laserrichtung 205 erfolgen. In der ersten Laserrichtung 204 werden dazu die Zeilen eines Rasters mit dem Laserstrahl abgefahren, bis der zu erhöhende Bereich 203 der zu erzeugenden Reliefstruktur - hier die Ziffer 4 - vollständig mit Energie beaufschlagt wurde. Anschließend wird der Laserstrahl auch in der zweiten Laserrichtung 205 über den zu erhöhenden Bereich 203 geführt, bis die Reliefstruktur vollständig ausgebildet ist.

### Bezugszeichenliste

- 101: Bereitstellung eines Datenträgers
- 102: Bestimmung geeigneter Laserparameter
- 103: Einstellung geeigneter Laserparameter
- 104: Zuführen von Strahlungsenergie in einer ersten Laserrichtung
- 105: Zuführen von Laserenergie Strahlungsenergie in einer zweiten Laserrichtung
- 200: Datenträger
- 201: Reliefstruktur
- 202: Schriftzeichen
- 203: zu erhöhender Bereich
- 204: erste Laserrichtung
- 205: zweite Laserrichtung
- 206: Liniengitter
- 207: erste Bahn
- 208: zweite Bahn
- 210: Sicherheits- und/oder Wertdokument
- 211: Lichtbild
- 212: Marken- oder Hoheitszeichen
- 213: Aufgedruckte Daten
- 214: Koordinatensystem
- 215: Ausschnitt

## Patentansprüche

1. Verfahren zur Herstellung einer Reliefstruktur, insbesondere zur Bildung taktiler Elemente, auf einem Datenträger (200) für ein Sicherheits- und/oder Wertdokument, umfassend die folgenden Schritte:
a. Bereitstellen eines Datenträgers (200) für ein Sicherheits- und/oder Wertdokument mit wenigstens einer Substratschicht, deren Volumen durch Energiezufuhr vergrößerbar ist,
b. Erzeugen einer Reliefstruktur (201) auf dem Datenträger (200) durch Zuführen von Energie mittels eines Lasers in zu erhöhende Bereiche (203) des Datenträgers (200),
c. wobei der Laserstrahl während der Energiezufuhr zunächst in wenigstens einer ersten Laserrichtung (204) und anschließend in wenigstens einer zweiten Laserrichtung (205) über die zu erhöhenden Bereiche (203) geführt wird.

2. Verfahren nach Anspruch 1, wobei die wenigstens eine zweite Laserrichtung (205) im Wesentlichen rechtwinkelig zur wenigstens einen ersten Laserrichtung (204) verläuft.

3. Verfahren nach Anspruch 1 oder 2, wobei der Laserstrahl während der Energiezufuhr in wenigstens einer weiteren Laserrichtung über die zu erhöhenden Bereiche (203) geführt wird.

4. Verfahren nach einem der obigen Ansprüche, wobei die Reliefstruktur (201) taktile Elemente bildet.

5. Verfahren nach einem der obigen Ansprüche, wobei mit der Reliefstruktur (201) Schriftzeichen (202) gebildet werden und die wenigstens eine erste oder die wenigstens eine zweite Laserrichtung einer Hauptlinienrichtung der Schriftzeichen (202) entspricht.

6. Verfahren nach einem der obigen Ansprüche, wobei die Energiezufuhr mittels des Lasers in der ersten Laserrichtung (204) mit einer ersten Leistung und in der zweiten Laserrichtung (205) mit einer zweiten Leistung erfolgt, wobei die zweite Leistung gegenüber der ersten Leistung verringert ist.

7. Verfahren nach einem der obigen Ansprüche, wobei die Leistung des Lasers in der wenigstens einen ersten Laserrichtung (204) etwa der Leistung des Lasers in der wenigstens einen zweiten Laserrichtung (205) entspricht, oder sich die Leistung des Lasers in der wenigstens einen ersten Laserrichtung (204) nicht mehr als 20%, vorzugsweise nicht mehr als 10% von der Leistung des Lasers in der wenigstens einen zweiten Laserrichtung (205) unterscheidet.

8. Verfahren nach einem der obigen Ansprüche, wobei die Strahlungsenergie des Lasers in der wenigstens einen ersten Laserrichtung (204) und in der wenigstens einen zweiten Laserrichtung (205) in jeweils identische Grundflächen eingebracht wird.

9. Verfahren nach einem der obigen Ansprüche, wobei der Laserstrahl entlang einem Raster bewegt und die Energie einmal zeilenweise und einmal spaltenweise den zu erhöhenden Bereichen (203) zugeführt wird.

10. Verfahren nach einem der obigen Ansprüche, wobei die Strahlungsenergie des Lasers gerastert eingebracht wird.

11. Verfahren nach einem der obigen Ansprüche, wobei eine Laserstrahlung absorbierende Schicht des Datenträgers (200) vor der Zuführung der Energie mittels des Lasers mit wenigstens einer für die Laserstrahlung zumindest teilweise durchlässigen Schicht bedeckt und verbunden wird.

12. Datenträger (200) mit wenigstens einer Reliefstruktur (201) hergestellt mit einem Verfahren nach einem der obigen Ansprüche.

13. Datenträger (200) nach Anspruch 12, wobei erhöhte Bereiche eine erste Erhöhung aufweisen, und eine zweite Erhöhung, die auf der ersten Erhöhung aufbaut.

14. Datenträger (200) nach Anspruch 12 oder 13, wobei die erhöhten Bereiche von einer mittleren Höhe zwischen 20-30 %, vorzugsweise 15-20 %, äußerst vorzugsweise weniger als 15 % abweichen.

15. Datenträger (200) nach einem der Ansprüche 12 bis 14, wobei der Datenträger (200) eine Vielzahl von Schichten aufweist, mit wenigstens einer Laserstrahlung absorbierenden Schicht und einer für die Laserstrahlung zumindest teilweise durchlässigen Schicht.
